# DEMANDE DE BREVET EUROPEEN

(11) **EP 4 296 592 A1**
(43) Date de publication de la demande: **27.12.2023**
(21) Numéro de dépôt: 22179972.9
(22) Date de dépôt: 20.06.2022
(51) Int. Cl.: F24S 20/66, F24S 20/67, F24S 50/40

(54) **DISPOSITIF ET PROCÉDÉ DE CAPTAGE D'ÉNERGIE THERMIQUE D'UN BÂTIMENT**

(71) Demandeur: Wise Open Foundation, 1630 Bulle (CH)
(72) Inventeur: Geinoz, François Ignace, 1630 Bulle (CH)
(74) Mandataire: Omnis-IP

(57) **Abrégé**

La présente invention concerne un dispositif de captage d'énergie thermique (10) d'un bâtiment, comportant au moins un capteur thermique (11) comportant au moins un tube (12) formant un circuit dans lequel circule un fluide caloporteur. Ce dispositif de captage (10) comporte au moins une sonde de température externe (18) agencée pour mesurer la température à proximité du capteur thermique (11), à l'extérieur du bâtiment et une sonde de température interne (17) agencée pour mesurer la température à proximité du capteur thermique (11), à l'intérieur du bâtiment. Le dispositif de l'invention comporte en outre un régulateur de température (19) agencé pour régler la température du fluide caloporteur dans ledit capteur thermique (11), en fonction de la température mesurée par la sonde de température externe (18) et par la sonde de température interne (17).

## Description

### DOMAINE TECHNIQUE

La présente invention concerne le domaine de la récupération et de la gestion d"énergie dans les bâtiments. Plus précisément, cette invention concerne un dispositif de captage d'énergie thermique d'un bâtiment, comportant au moins un capteur thermique comportant au moins un tube formant un circuit dans lequel circule un fluide caloporteur.

La présente invention concerne également un procédé de captage d'énergie thermique d'un bâtiment au moyen d'un dispositif de captage comportant au moins un capteur thermique comportant au moins un tube formant un circuit dans lequel circule un fluide caloporteur, au moins une sonde de température externe agencée pour mesurer la température à proximité du capteur thermique, à l'extérieur du bâtiment et une sonde de température interne agencée pour mesurer la température à proximité du capteur thermique, à l'intérieur du bâtiment, et un régulateur de température agencé pour régler la température du fluide caloporteur dans ledit capteur thermique.

### ART ANTÉRIEUR

Actuellement, le secteur du bâtiment est un très grand consommateur d'énergie et contribue pour une part importante à la production de gaz à effet de serre.

L'énergie opérationnelle, soit l'énergie qui est consommée pour qu'un bâtiment remplisse ses fonctions ou l'énergie consommé pendant l'utilisation d'un bâtiment, comprend notamment l'énergie nécessaire au chauffage, à la production d'eau chaude sanitaire, au refroidissement, à la ventilation, à l'éclairage et au fonctionnement des équipements et des appareils. L'énergie pour le chauffage et la production d'eau chaude sanitaire représente à elle seule une importante partie de la consommation d'énergie totale d'un bâtiment.

Pour des raisons économiques tout d'abord, suite à la crise du pétrole dans les années 1970, puis pour des raisons écologiques, dans le cadre de la lutte contre le réchauffement climatique, des mesures ont été prises pour diminuer la consommation de l'énergie opérationnelle des bâtiments. Cette consommation a passé de l'équivalent de 22 litres de mazout par année et par mètre carré de surface à chauffer dans les années 1970 à 10 litres par année et par mètre carré dans les années 2000 et à moins de 5 litres par année et par mètre carré à partir de 2010. Cette diminution des besoins en énergie a été essentiellement obtenue en isolant les bâtiments avec une isolation de plus en plus épaisse et de plus en plus performante. Cette isolation permet de diminuer le transfert d'énergie de la source chaude, généralement l'intérieur du bâtiment, vers la source froide, généralement l'extérieur du bâtiment.

Bien que l'isolation ait permit de diminuer fortement la consommation d'énergie de chauffage dans les bâtiments, elle présente un certain nombre d'inconvénients.

Si l'isolation empêche la chaleur contenue à l'intérieur d'une habitation de s'échapper vers l'extérieur, elle empêche également la chaleur de l'extérieur du bâtiment d'être utilisée, privant ainsi le bâtiment d'une source d'énergie qui peut être conséquente.

Inversement, lorsque l'intérieur du bâtiment est à une température plus élevée que l'extérieur, l'isolation empêche la chaleur de s'échapper vers l'extérieur et empêche ainsi de rafraîchir l'intérieur du bâtiment.

Pour qu'une isolation soit efficace, elle doit complètement entourer le bâtiment. En effet, il est important d'éviter les ponts de froid ou ponts thermiques qui, même lorsqu'ils sont de petite dimension, diminuent de façon importante l'efficacité de l'isolation.

Dans le cas de constructions neuves, l'intégration de l'isolation est généralement prévue lors de la conception du bâtiment. Même si cette isolation représente un coût, ce coût peut être amorti grâce aux diminutions des frais de chauffage.

Dans le cas de la rénovation de bâtiment, l'isolation peut être particulièrement compliquée et couteuse à réaliser. Dans certains cas, il n'est pas possible de réaliser une isolation extérieure. Une isolation intérieure doit avoir une épaisseur importante, typiquement de 10 à 20 cm, pour être efficace. Les frais engendrés par l'isolation d'un bâtiment peuvent être prohibitifs.

La durée de vie des bâtiments étant de plusieurs dizaines voire de plusieurs centaines d'années, le parc immobilier comprend nécessairement un grand nombre de bâtiments anciens, dont l'efficacité énergétique est loin de celle des bâtiments de construction récente. La rénovation énergétique des bâtiments représente donc un problème important, dont la résolution est toutefois complexe et couteuse.

Par ailleurs, l'isolation des bâtiments agit sur la consommation d'énergie utilisée pour le chauffage. Elle n'a pas d'influence sur la consommation d'énergie utilisée pour la production d'eau chaude sanitaire, qui représente toutefois une part importante de la consommation totale d'énergie.

En plus de l'amélioration de l'isolation des bâtiments, l'amélioration de l'efficacité énergétique est également obtenue par l'emploi d'énergie d'origine renouvelable. Pour utiliser de l'énergie renouvelable, il existe des capteurs thermiques fonctionnant notamment grâce au rayonnement solaire.

L'efficacité ou le rendement d'un tel capteur est défini comme le rapport entre la puissance thermique qu'il fournit à un fluide caloporteur et la puissance du rayonnement d'énergie thermique qui arrive sur la surface utile de ce capteur.

La puissance fournie par le capteur correspond à la puissance transformée en chaleur par le capteur, moins les pertes. Ces pertes comprennent notamment le rayonnement thermique restitué et la chaleur dissipée à l'extérieur du réseau de capteurs.

Le meilleur rendement est obtenu lorsque les pertes sont nulles, c'est-à-dire lorsque la température du capteur est inférieure ou égale à la température ambiante du milieu d'où est prélevée l'énergie thermique.

A l'extrême opposé, le rendement est nul lorsque le fluide caloporteur est arrêté, soit lorsque la température de ce fluide caloporteur atteint la température de stagnation. Dans ce cas, les pertes du capteur thermique sont égales à la puissance transformée en chaleur par ce capteur.

Un défaut des différents capteurs thermiques existants, que ce soit solaires ou autres, vient du fait que la collecte de l'énergie de l'environnement n'est pas assurée en continu. En effet, le rendement diminue ou est nul du fait de la défaillance partielle et/ou temporaire de la source thermique environnementale. Ainsi, la discontinuité de l'alimentation en énergie thermique des capteurs implique l'utilisation d'un dispositif de stockage d'énergie thermique afin d'assurer la continuité de l'alimentation.

En conséquence des éléments mentionnés ci-dessus, le coût d'un kWh d'énergie thermique fournie par un capteur est généralement très supérieur au coût d'un kWh produit par des combustibles fossiles.

Il est donc important de trouver une solution pour améliorer l'efficacité énergétique des bâtiments qui sont relativement simple à mettre en place, sans engendrer des coûts prohibitifs et des nuisances rédhibitoires. Cette solution devrait également permettre de résoudre les problèmes de récupération de l'énergie « diffuse », à savoir l'énergie qui n'est pas localisée dans une source d'énergie déterminée, mais qui se trouve dans l'ensemble ou une partie du bâtiment. La solution proposée devrait également prendre en compte les problèmes de stockage de cette énergie récupérée.

### DESCRIPTION DE L'INVENTION

La présente invention permet de résoudre les problèmes mentionnés ci-dessus en proposant une solution permettant notamment de récupérer l'énergie disponible dans et autour d'un bâtiment, sans devoir installer une isolation couteuse et difficile à mettre en oeuvre.

Les buts de l'invention sont atteints par un dispositif de captage d'énergie thermique tel que défini en préambule, caractérisé en ce que le dispositif de captage comporte au moins une sonde de température externe agencée pour mesurer la température à proximité du capteur thermique, à l'extérieur du bâtiment et une sonde de température interne agencée pour mesurer la température à proximité du capteur thermique, à l'intérieur du bâtiment, et un régulateur de température agencé pour régler la température du fluide caloporteur dans ledit capteur thermique, en fonction de la température mesurée par la sonde de température externe et par la sonde de température interne.

La présente invention concerne également un procédé de captage d'énergie thermique tel que défini en préambule et caractérisé en ce qu'il comporte les étapes suivantes :
- mesure de la température à proximité du capteur thermique, à l'extérieur du bâtiment ;
- mesure de la température à proximité du capteur thermique, à l'intérieur du bâtiment ;
- réglage de la température du fluide caloporteur dans ledit capteur thermique, cette température étant nommée température de consigne et dépendant de la température mesurée à l'extérieur du bâtiment et de la température mesurée à l'intérieur du bâtiment.

Le dispositif de l'invention permet d'optimiser le captage de l'énergie disponible à proximité de l'enveloppe d'un bâtiment. Ce captage peut être réalisé en continu, avec un bon rendement et un coût au kWh très compétitif. De plus, le système est optimisé pour fonctionner avec le réseau de distribution thermique de l'utilisateur final, ce qui peut permettre de diminuer les besoins de stockage de cette énergie. Ce système est toutefois compatible avec un système de stockage d'énergie et avec un système de pompe à chaleur notamment.

Le dispositif de captage thermique de l'invention agit comme un puits d'énergie ramenant vers lui tous les flux thermiques entrant ou sortant d'un bâtiment. Ces flux d'énergie thermiques sont notamment les différents flux d'énergie solaire, les pertes d'énergie thermique du bâtiment et l'énergie thermique de l'environnement.

L'importance des flux d'énergie thermique sortant du bâtiment dépend de la perméabilité des éléments de construction et du frein thermique apporté par l'éventuelle isolation thermique contenue dans ces éléments de l'enveloppe du bâtiment.

La particularité de ce système est que la collecte d'énergie est multimodale et qu'elle s'effectue en toutes saisons, de jour comme de nuit. En effet, l'énergie solaire directe n'est disponible que le jour, l'énergie thermique de l'environnement extérieur du bâtiment n'est disponible qu'au-dessus d'une valeur de seuil d'environ 5 °C et les déperditions du bâtiment sont disponibles en permanence.

### BRÈVE DESCRIPTION DES DESSINS

La présente invention et ses avantages seront mieux compris en référence aux figures annexées et à la description détaillée d'un mode de réalisation particulier, dans lesquelles :

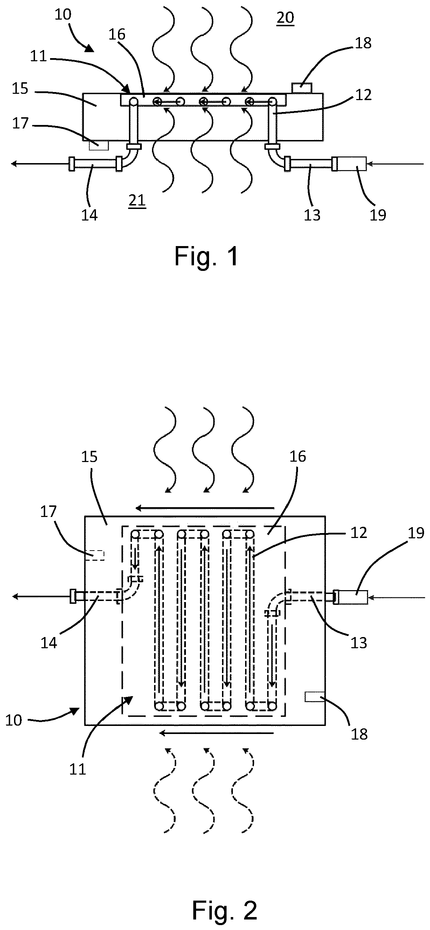

- la figure 1 est une vue en coupe d'un capteur thermique utilisé dans un dispositif selon l'invention ;
- la figure 2 est une vue de face du capteur thermique de la figure 1 ;
- la figure 3 est une vue en coupe d'un bâtiment équipé du dispositif de l'invention ;
- la figure 4 est une vue schématique illustrant les flux thermiques selon une première utilisation du dispositif de l'invention ; et
- la figure 5 est une vue schématique illustrant les flux thermiques selon une deuxième utilisation du dispositif de l'invention.

### MODE DE REALISATION DE L'INVENTION

En référence aux figures, le dispositif 10 de captage d'énergie thermique de l'invention comporte au moins un capteur thermique 11 comportant au moins un tube 12 formant un circuit dans lequel circule un fluide caloporteur. Ce circuit comporte au moins une entrée 13 de fluide caloporteur et au moins une sortie 14 de ce fluide caloporteur. Le tube 12 a de préférence un diamètre intérieur de l'ordre de 5 à 10 mm et résiste à une pression du fluide caloporteur comprise entre 15 et 25 bars au moins et de préférence entre 15 et 75 bars. Le diamètre du tube étant relativement petit, la mise en œuvre de ce tube est relativement aisée et permet un captage thermique efficace.

Le tube 12 du capteur thermique 11 peut être totalement ou partiellement noyé dans la masse d'un élément de construction 15 formant une enveloppe de bâtiment. La disposition du tube ou du capteur thermique peut également varier en fonction de l'endroit spécifique du bâtiment dans lequel le capteur thermique est installé. Ainsi, il est par exemple possible de noyer complètement le tube des capteurs thermiques dans un plafond d'un sous-sol du bâtiment, de noyer partiellement le tube d'un autre capteur formant une cloison de l'enveloppe de ce bâtiment et de disposer le tube d'un autre capteur sous un panneau solaire thermique ou photovoltaïque placé sur une partie de la toiture du bâtiment.

Le tube 12 du capteur thermique peut également être noyé ou fixé partiellement ou totalement dans une matrice qui permet de former un panneau 16 qu'il est possible de poser ou de fixer contre ou à proximité de l'enveloppe du bâtiment.

Le dispositif de captage de l'invention comporte en outre au moins deux sondes de température. L'une de ces sondes, nommée sonde de température interne 17, est agencée pour mesurer la température à proximité du capteur thermique 11, à l'intérieur du bâtiment ou du côté du capteur disposé vers l'intérieur du bâtiment. Une autre sonde, nommée sonde de température externe 18, est agencée pour mesurer la température à proximité du capteur thermique, à l'extérieur du bâtiment ou du côté du capteur disposé vers l'extérieur du bâtiment. Plus généralement, la sonde de température interne 17 est agencée pour mesurer la température d'un côté du capteur thermique, soit contre le capteur thermique, soit à proximité d'un élément de construction contre lequel est placé ce capteur thermique. La sonde de température externe 18 est agencée pour mesurer la température de l'autre côté du capteur thermique, soit contre le capteur thermique, soit à proximité d'un élément de construction contre lequel est placé ce capteur thermique.

Le dispositif de l'invention comporte en outre au moins un régulateur de température 19, agencé pour régler la température du fluide caloporteur circulant à l'intérieur du tube 12.

Selon un mode de réalisation préféré, le fluide caloporteur est formé de dioxyde de carbone ou gaz carbonique CO₂. L'utilisation de ce fluide présente plusieurs avantages. D'une part, il peut être utilisé sans adjonction de liquides tels que de l'antigel et ne change pas d'état dans la gamme des températures utilisées. D'autre part, la température du gaz peut être gérée relativement facilement en modifiant la pression du CO₂ à l'intérieur du tube.

Le régulateur de température 19 est avantageusement formé d'un détendeur agencé pour réguler la pression du gaz circulant à l'intérieur du tube du capteur thermique. Le régulateur de température 19 utilise en fait la régulation de la pression du gaz caloporteur pour atteindre le but recherché, à savoir régler la température du fluide caloporteur à une température déterminée, nommée température de consigne.

En pratique, le dispositif de l'invention comporte une pluralité de zones de captage thermique qui peuvent être indépendants les uns des autres et comporter leurs propres sondes de température et leur propre régulateur de température. Chaque zone de captage thermique comporte au moins un capteur thermique 11, une sonde de température interne 17, une sonde de température externe 18 et un régulateur de température 19. Les différents capteurs thermiques d'une même zone peuvent par exemple être connectés en série de sorte que la sortie du tube de l'un des capteurs est reliée à l'entrée du tube d'un capteur suivant.

Ces capteurs thermiques peuvent également être reliés en parallèles, de sorte qu'une même entrée peut relier plusieurs tubes de différents capteurs thermiques.

Une combinaison de ces différents modes est également envisageable. Certains capteurs thermiques peuvent être indépendants à certains endroits du bâtiment qu'ils équipent, être reliés en parallèle à d'autres endroit et/ou en série dans d'autres endroits encore.

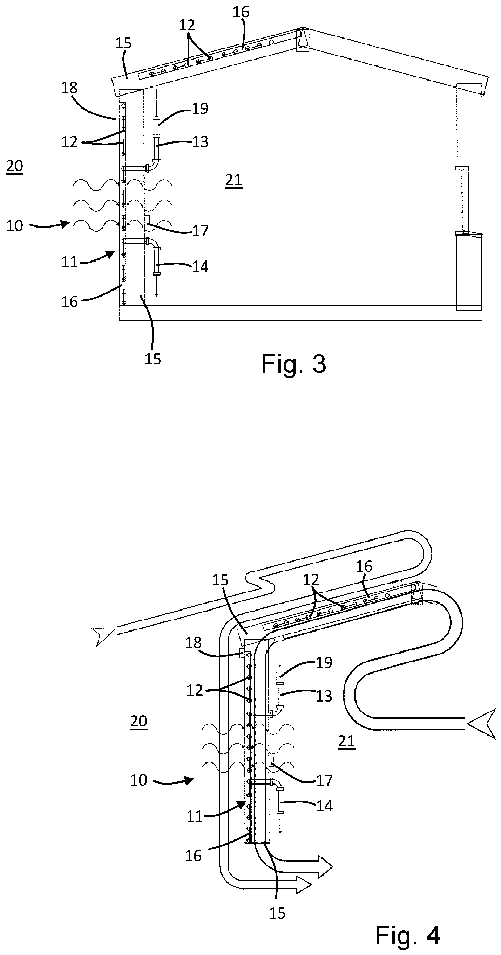

Selon un premier mode de réalisation illustré notamment par la figure 3, les capteurs thermiques 11 sont placés sur la face externe d'un élément de construction 15 de l'enveloppe du bâtiment. De cette façon, la surface de captage thermique est idéalement située en contact pratiquement direct avec l'environnement externe 20 du bâtiment et en contact indirect avec l'environnent interne 21 du bâtiment.

Les sondes de température 17, 18 mesurent la température à l'intérieur du bâtiment et à l'extérieur de celui-ci, à proximité du capteur thermique considéré.

La température du fluide caloporteur est régulée au moyen du régulateur de température 19 de telle façon que le capteur thermique 11 joue le rôle de puit d'énergie. A cet effet, cette température est maintenue à une température égale ou inférieure à la température la plus basse entre la température à l'extérieur du bâtiment et la température à l'intérieur de ce bâtiment

Selon un mode de réalisation préféré, si la température extérieure est inférieure ou égale à une valeur de seuil déterminée, de l'ordre de 5 °C, la température du fluide caloporteur est maintenue à une température égale à la température de l'environnement externe du bâtiment. Dans ce cas, aucune énergie provenant de l'extérieur du bâtiment n'est absorbée par le capteur thermique.

Si la température extérieure est supérieure à la valeur de seuil de l'ordre de 5 °C, la température du fluide caloporteur est régulée de telle façon qu'elle soit inférieure à cette température extérieure. De cette façon, du fait que l'énergie se déplace d'un corps chaud vers un corps froid, le capteur thermique 11, et plus précisément le fluide caloporteur qui y circule, capte de l'énergie provenant de l'environnement externe 20. La différence de température entre le fluide caloporteur et la température la plus froide entre l'environnement externe et l'environnement interne peut être de quelques degrés. La faible différence de température peut être compensée par la grande surface disponible au niveau de l'enveloppe du bâtiment.

Dans l'invention, la surface du capteur thermique 11 est également en contact indirect avec l'environnent interne 21 du bâtiment. Ce capteur thermique est également utilisé comme puit d'énergie par rapport à l'environnement interne du bâtiment. A cet effet, la température du fluide caloporteur est maintenue à une température inférieure à la température de l'environnement interne 21 du bâtiment.

De ce fait, l'énergie qui est normalement perdue à travers l'enveloppe d'un bâtiment est récupérée par le capteur thermique.

Afin que le capteur thermique 11 joue le rôle de puit d'énergie aussi bien face à l'environnement externe 20 qu'à l'environnement interne 21, la température du fluide caloporteur est inférieure ou égale à la température la plus basse entre la température de l'environnement externe et de l'environnement interne.

Ce dispositif de captage 10 présente de nombreux avantages. Il est par exemple possible de placer plusieurs capteurs thermiques formant des circuits distincts et des zones de captage distinctes et comportant chacun leurs sondes de température et leur régulateur de température à différents endroits de l'enveloppe d'un bâtiment. De cette façon, il est possible de réguler la température de chaque zone de façon indépendante.

Ainsi, la température du fluide caloporteur de capteurs thermiques qui sont par exemple exposés au soleil pourra être différente de la température du fluide caloporteur de capteurs exposés au vent ou situés à l'ombre. Grâce à cette régulation spécifique, chaque zone pourra être réglé de façon à produire un maximum d'énergie.

Un autre avantage vient du fait que les capteurs thermiques 11 assurent une isolation absolue des parties de l'enveloppe d'un bâtiment qu'ils équipent. En effet, aucun flux de chaleur entrant ou sortant ne peut traverser le périmètre équipé de tels capteurs.

Par ailleurs, contrairement à une isolation conventionnelle, il n'est pas nécessaire que les capteurs thermiques entourent complètement l'enveloppe du bâtiment. En effet, les capteurs thermiques ne sont pas sensibles aux ponts thermiques ou ponts de froid et fonctionnent parfaitement même en présence de tels ponts thermiques.

De plus, comme l'énergie provenant de l'intérieur du bâtiment est récupérée, une isolation de faible épaisseur voire l'absence totale d'isolation peut suffire. L'isolation peut être utile notamment pour augmenter le confort, pour éviter que les cloisons du bâtiment ne soient froides, mais elle n'est pas indispensable.

La température du fluide caloporteur est régulée à l'entrée du capteur thermique par un dispositif de détente partielle du gaz CO₂. Les entrées des différents capteurs thermiques sont alimentées en gaz carbonique a une pression et une température déterminée, qui peuvent être les mêmes pour tous les capteurs thermiques ou qui peuvent être variables en fonction des capteurs considérés. La température de consigne est ensuite déterminée, cette température de consigne étant celle que doit avoir le fluide caloporteur dans le capteur considéré. Si la température de l'environnement externe est inférieure à 5 °C, la température du fluide caloporteur est en principe égale à la température de cet environnement externe. Si la température de l'environnement externe est supérieure à 5 °C, la température du fluide caloporteur est de quelques degrés inférieure à la température la plus basse entre la température de l'environnement externe et de celle de l'environnement interne. La valeur de 5 °C mentionné ci-dessus est arbitraire et pourrait être différente. La différence de température entre la valeur la plus basse entre la température extérieure et intérieure peut varier entre 0 °C et quelques dizaines de degrés Celsius. En pratique, la température du fluide caloporteur ne descendra pas en dessous de 5 °C si les températures de l'environnement externe et interne sont supérieures à 5 °C.

Le fluide caloporteur circule dans un volume prédéterminé et constant. Comme cela est bien connu, à volume constant, la pression d'une certaine quantité de gaz est directement proportionnelle à sa température absolue. Comme indiqué plus haut, les capteurs thermiques comportent un détendeur. Celui-ci permet de modifier la pression du gaz carbonique dans les capteurs et permet de cette façon de réguler la température du fluide caloporteur dans les capteurs.

### Simulation

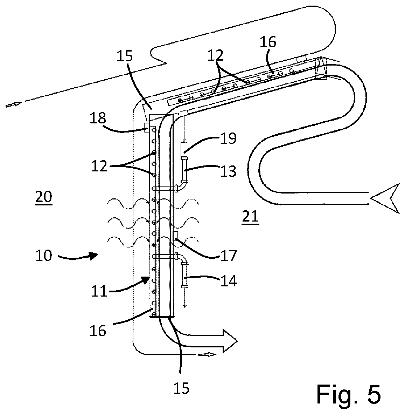

Les figures 4 et 5 illustrent deux exemples de simulations de fonctionnement du dispositif de l'invention. Ces simulations démontrent une excellente efficacité du système, même sur de très petites surfaces, en toute saison et à toute heure du jour ou de la nuit.

Il est à noter que le dispositif est efficace même lorsqu'il y a une différence de quelques degrés entre le fluide caloporteur et l'environnement de captage d'énergie thermique. La surface de captage (toiture et façade) étant en général importante, cela permet de capter une énergie conséquente.

La figure 4 représente la production d'énergie selon l'invention, pendant trois mois, au printemps. Supposons que la température extérieure moyenne soit de 7 °C sur la période considérée et la température intérieure du bâtiment soit de 25 °C.

La température moyenne du fluide caloporteur est de 5 °C sur la période considérée.

Supposons également que la surface de capteurs thermiques 11 soit de 50 m² pour un bâtiment ayant une surface potentiellement disponible de 220 m².

Le coefficient de transfert thermique est respectivement :
- + 25 W/m²/°Kelvin pour l'environnement externe,
- + 15 W/m²/°Kelvin pour l'environnement interne. La diminution du coefficient est due à l'isolation thermique de l'élément de construction.

Il faut aussi noter qu'un bâtiment moins bien isolé aura plus de déperditions thermiques, donc le coefficient de transfert thermique interne sera d'autant plus important.

Les écarts de température sont les suivants :
- + 7 - 5 = +2 °C d'écart entre la température du fluide caloporteur et la température de l'environnement externe,
- + 25 - 5 = +20 °C d'écart entre la température du fluide caloporteur et la température de l'environnement interne.

Les productions d'énergie thermique respectives sont :
- + 5.40 MWh provenant de l'environnement externe,
- + 7.36 MWh de l'environnement interne, soit :
- + 12.76 MWh au total

La figure 5 représente la production d'énergie selon l'invention, pendant trois mois, en hiver. La température extérieure moyenne est de -2 °C sur la période considérée. La température intérieure du bâtiment est de 25 °C.

La température du fluide caloporteur est également de - 2 °C en moyenne sur la période, c'est-à-dire identique à la température extérieure, de manière à stopper le flux de chaleur depuis l'extérieur vers l'intérieur, ce flux n'étant pas intéressant en termes d'efficacité énergétique.

Comme précédemment, la surface de capteurs thermiques est de 50 m² pour un bâtiment ayant une surface potentiellement disponible de 220 m².

Les puissances des flux de chaleur sont les mêmes que précédemment, à savoir respectivement :
- + 25 W/m²/°Kelvin pour l'environnement externe,
- + 15 W/m²/°Kelvin pour l'environnement interne.

Les écarts de température sont les suivants :
- + 2 - (-2) = écart de 0 °C entre le fluide et le l'environnement externe,
- + 25 - (-2) = + 27 °C de différence entre le fluide et le l'environnement interne.

Les productions d'énergie thermique respectives sont :
- + 0.00 MWh provenant de l'environnement externe,
- + 9.94 MWh de l'environnement interne, soit
- + 9.94 MWh au total.

Il est à noter que bien que l'apport externe soit nul, les pertes internes compensent la perte d'efficacité thermique en hiver.

Le fluide caloporteur composé de CO₂ pur permet de l'utiliser en toute saison et à toute température sans aucun additif.

Cela signifie que le système est alimenté uniquement par de l'énergie thermique renouvelable. La contribution est constituée des pertes d'énergie thermique du bâtiment et en complément de l'énergie contenue dans l'air ambiant extérieur si les conditions le permettent.

Il est à noter que les simulations décrites ci-dessus ont été faites sur la base de moyennes de température. Dans la réalité, les sondes de température externe et interne mesurent les températures en continu ou à intervalles réguliers. L'adaptation de la température de consigne du fluide caloporteur dans chaque zone de captage peut être réalisée également en continu ou à intervalles réguliers. Ceci permet une adaptation dynamique de la température du fluide caloporteur et une optimisation à chaque instant, de la récupération d'énergie.

Selon un mode de réalisation préféré, les capteurs thermiques tels que décrits ci-dessus sont couplés à au moins un échangeur de chaleur destinés à récupérer l'énergie thermique des capteurs thermiques. Ces échangeurs de chaleur peuvent être liés à une ou des pompes à chaleur à CO₂ qui peuvent être utilisées pour couvrir les besoins en chauffage et en eau chaude sanitaire du bâtiment.

Ces systèmes peuvent être conçus comme des systèmes autonomes, c'est-à-dire comporter un chauffe-eau à pompe à chaleur en combinaison avec des unités séparées pour le chauffage des locaux, ou être une unité intégrée pour le chauffage des locaux et le chauffage de l'eau chaude.

Les systèmes de pompe à chaleur résidentiels intégrés utilisant du dioxyde de carbone CO₂ comme fluide de travail peuvent atteindre un coefficient de performance (COP) élevé. Les pompes à chaleur CO₂ pour le chauffage des locaux et le chauffage de l'eau chaude sanitaire peuvent être conçues pour utiliser différentes sources de chaleur telles que le substrat rocheux, le sol, l'air de ventilation extrait, l'air ambiant ou une combinaison d'air de ventilation extrait et d'air ambiant.

L'importance des flux d'énergie thermique sortant du bâtiment dépend de la perméabilité de l'élément de construction et du frein thermique apporté par l'éventuelle isolation thermique contenue dans cet élément de l'enveloppe du bâtiment.

Le vecteur énergétique est constitué de dioxyde de carbone pur (CO₂) à une pression de service variable (15 à 25 bars) sans aucun autre additif. La température du fluide caloporteur est régulée à l'entrée de la surface de captage par un dispositif de détente partielle du gaz CO₂.

Le circuit des capteurs thermiques est toujours à basse température ce qui entraîne que la dilatation thermique des tubes est limitée. Les contraintes mécaniques sont donc également faibles.

Les éléments de construction potentiellement adaptés à la mise en place d'un capteur thermique sont les façades à l'exception des huisseries telles que les portes et fenêtres, ainsi que la toiture. Les plafonds des sous-sols peuvent également convenir.

Le potentiel d'équipement de l'enveloppe du bâtiment peut ainsi varier de 30 à 65 %, réduisant la consommation d'énergie dans les mêmes proportions en récupérant les pertes de chaleur et en les réintégrant dans le système d'alimentation en énergie thermique du bâtiment.

Le système global de captage thermique du bâtiment récupère les différents flux d'énergie solaire, les pertes d'énergie thermique du bâtiment et l'énergie thermique de l'environnement.

Une particularité de ce système est que la collecte d'énergie est multimodale et s'effectue en toutes saisons, de jour comme de nuit. En effet, l'énergie solaire directe n'est disponible que le jour, l'énergie thermique de l'environnement extérieur du bâtiment n'est disponible qu'au-dessus de 5 °C environ et les déperditions du bâtiment sont disponibles en flux permanent.

L'énergie thermique captée au niveau des éléments de façade et de toiture ou des fenêtres du bâtiment peut être entièrement stockée dans un réservoir basse pression basse température.

L'énergie électrique de panneaux photovoltaïques peut être utilisée, le cas échéant, pour surchauffer l'énergie thermique stockée dans le réservoir à haute température et haute pression.

Par le fait que toutes les déperditions thermiques du bâtiment peuvent potentiellement être récupérées par le système proposé par l'invention précitée, il est alors possible de rénover des bâtiments plus anciens sans recourir systématiquement à une isolation excessive, tout en atteignant le même niveau d'énergie efficacité que des bâtiments plus modernes et mieux isolés.

## Revendications

1. Dispositif de captage d'énergie thermique (10) d'un bâtiment, comportant au moins un capteur thermique (11) comportant au moins un tube (12) formant un circuit dans lequel circule un fluide caloporteur, **caractérisé en ce que** le dispositif de captage (10) comporte au moins une sonde de température externe (18) agencée pour mesurer la température à proximité du capteur thermique (11), à l'extérieur du bâtiment et une sonde de température interne (17) agencée pour mesurer la température à proximité du capteur thermique (11), à l'intérieur du bâtiment, et un régulateur de température (19) agencé pour régler la température du fluide caloporteur dans ledit capteur thermique (11), en fonction de la température mesurée par la sonde de température externe (18) et par la sonde de température interne (17).

2. Dispositif de captage d'énergie thermique selon la revendication 1, **caractérisé en ce que** le fluide caloporteur circule dans ledit circuit à l'état gazeux.

3. Dispositif de captage d'énergie thermique selon la revendication 1 ou 2, **caractérisé en ce que** le fluide caloporteur comporte du gaz carbonique CO₂.

4. Dispositif de captage d'énergie thermique selon l'une quelconque des revendications 2 ou 3, **caractérisé en ce que** le régulateur de température (19) comporte un détendeur agencé pour modifier la pression du fluide caloporteur dans le circuit.

5. Dispositif de captage d'énergie thermique selon la revendication 1, **caractérisé en ce que** le capteur thermique (11) comporte au moins une entrée de fluide caloporteur (13) et au moins une sortie de fluide caloporteur (14), l'entrée de fluide caloporteur étant agencée pour être connectée à une source de fluide caloporteur et la sortie étant agencée pour être connectée à un échangeur de chaleur.

6. Dispositif de captage d'énergie thermique selon la revendication 1, **caractérisé en ce que** ce dispositif comporte une pluralité de capteurs thermiques (11).

7. Dispositif de captage d'énergie thermique selon la revendication 6, **caractérisé en ce que** ce dispositif comporte une pluralité de zones de captage thermique, chaque zone de captage thermique comportant au moins un capteur thermique (11), une sonde de température interne (17), une sonde de température externe (18) et un régulateur de température (19).

8. Procédé de captage d'énergie thermique d'un bâtiment au moyen d'un dispositif de captage (10) comportant au moins un capteur thermique (11) comportant au moins un tube (12) formant un circuit dans lequel circule un fluide caloporteur, au moins une sonde de température externe (18) agencée pour mesurer la température à proximité du capteur thermique (11), à l'extérieur du bâtiment et une sonde de température interne (17) agencée pour mesurer la température à proximité du capteur thermique (11), à l'intérieur du bâtiment, et un régulateur de température (19) agencé pour régler la température du fluide caloporteur dans ledit capteur thermique (11), ce procédé étant **caractérisé en ce qu'**il comporte les étapes suivantes :
• mesure de la température à proximité du capteur thermique (11), à l'extérieur du bâtiment ;
• mesure de la température à proximité du capteur thermique (11), à l'intérieur du bâtiment ;
• réglage de la température du fluide caloporteur dans ledit capteur thermique (11), cette température étant nommée température de consigne et dépendant de la température mesurée à l'extérieur du bâtiment et de la température mesurée à l'intérieur du bâtiment.

9. Procédé de captage d'énergie thermique selon la revendication 8, **caractérisé en ce que** la température de consigne du fluide caloporteur est égale à la température la plus basse entre la température à l'intérieur du bâtiment et la température à l'extérieur du bâtiment lorsque cette température la plus basse est inférieure ou égale à une valeur de seuil.

10. Procédé de captage d'énergie thermique selon la revendication 8, **caractérisé en ce que** la température de consigne du fluide caloporteur est inférieure à la température la plus basse entre la température à l'intérieur du bâtiment et la température à l'extérieur du bâtiment lorsque cette température la plus basse est supérieure à une valeur de seuil.

11. Procédé de captage d'énergie thermique selon la revendication 9 ou 10, **caractérisé en ce que** la valeur de seuil est égal à 5 °C.

12. Procédé de captage d'énergie thermique selon la revendication 8, dans lequel ledit fluide caloporteur est un gaz, ce procédé étant **caractérisé en ce que** l'on règle la température du fluide caloporteur dans ledit capteur thermique (11) en modifiant la pression dudit fluide caloporteur dans le capteur thermique (11).

13. Procédé de captage d'énergie thermique selon la revendication 8, **caractérisé en ce que** l'on introduit ledit fluide caloporteur dans ledit circuit d'un capteur thermique (11) à une pression déterminée, on extrait ledit fluide caloporteur dudit capteur thermique par une sortie et on transmet ledit fluide caloporteur à un échangeur de chaleur.

14. Procédé de captage d'énergie thermique selon la revendication 8, dans lequel le dispositif de captage (10) comporte une pluralité de zones de captage thermique, chaque zone de captage thermique comportant au moins un capteur thermique (11), une sonde de température interne (17), une sonde de température externe (18) et un régulateur de température (19), **caractérisé en ce que** l'on régule la température du fluide caloporteur de façon indépendante dans les différentes zones de captage thermique.
